Europäisches Patentamt

European Patent Office

Office européen des brevets

(19)

(11) Publication number: **0 605 060 A2**

## EUROPEAN PATENT APPLICATION

(12)

(21) Application number: **93203709.6**

(22) Date of filing: **27.12.93**

(51) Int. Cl.5: **C08L 69/00**, //(C08L69/00, 53:02)

(30) Priority: **28.12.92 US 996945**

(43) Date of publication of application: **06.07.94 Bulletin 94/27**

(84) Designated Contracting States: **BE DE FR GB IT NL**

(71) Applicant: **SHELL INTERNATIONALE RESEARCH MAATSCHAPPIJ B.V. Carel van Bylandtlaan 30 NL-2596 HR Den Haag(NL)**

(72) Inventor: **Wilkey, John David 3438 Kennonview Drive Houston, Texas 77068(US)**

(54) **Polycarbonate blends.**

(57) A blend comprising at least one aromatic polycarbonate and a selectively hydrogenated block copolymer of a vinyl aromatic compound and a conjugated diene, which block copolymer has been modified with at least one polyester which is miscible with the aromatic polycarbonate. The blend has excellent mechanical properties, particularly low temperature Notched Izod Impact Strength and flexural modulus.

EP 0 605 060 A2

This invention generally relates to polymer blends. More particularly, the invention relates to a blend comprising a modified block copolymer and at least one aromatic polycarbonate. These blends have excellent mechanical properties, particularly improved low temperature Notched Izod impact strength.

Aromatic polycarbonates are known in the art. Although aromatic polycarbonates are known to have excellent mechanical properties, they are also known to be relatively brittle at low temperatures. It is also known in the art that aromatic polycarbonates may be impact modified by using hydrogenated block copolymers of vinyl aromatic compounds and conjugated dienes (rubbers). One drawback of such modification is that ductile failure is not achievable in such modified polycarbonates, because the required high amount of rubber loading results in delamination and unacceptable loss of stiffness. The practical consequence of this is that it limits the fields of applications of these resins.

Therefore, there is a need, particularly for industry, to produce a blend comprising at least one aromatic polycarbonate and a hydrogenated block copolymer of a vinyl aromatic compound and a conjugated diene, which overcomes these limitations. Such a blend would among other properties, exhibit ductile failure at -40 ° C while retaining a high flexural modulus.

In accordance with this invention, it is now provided a blend comprising at least one aromatic polycarbonate and a selectively hydrogenated block copolymer comprising at least one block of polymerized vinyl aromatic compound and at least one hydrogenated block of polymerized conjugated diene, which block copolymer has been modified with at least one polyester which is miscible with the aromatic polycarbonate.

The useful aromatic polycarbonates including their methods of manufacturing are known in the art. These aromatic polycarbonates are typically derived from dihydric phenols such as, for example, 2,2-bis(4-hydroxyphenyl)propane (also referred to as bisphenol-A; i.e., BPA), bis(4-hydroxyphenyl)methane, 2,2-bis(4-hydroxy-3-methylphenyl)propane, 4,4-bis(4-hydroxyphenyl)-heptane, 2,2-(3,5,3',5-tetrachloro-4,4'-dihydroxyphenyl)propane, 2,2-(3,5,3',5-tetrabromo-4,4'-dihydroxy-diphenyl)propane, and (3,3'-dichloro-4,4'-dihydroxydi-phenyl)methane. The preferred aromatic polycarbonate is bisphenol-A polycarbonate. Additional information about suitable aromatic polycarbonates can for instance be obtained from U.S. Patent 4,255,534.

The useful polyesters are those that are miscible with aromatic polycarbonates. Examples of such compounds include polycaprolactone, poly(1,4-cyclohexanedimethylene succinate), poly(ethylene succinate), poly(ethylene adipate), poly(1,4-butylene adipate), polymer from 1,4-cyclohexanedimethanol and terephthalic acid, and polymer from 1,4-cyclohexanedimethanol and tere- and isophthalic acid (80%/20%). The preferred polyester is polycaprolactone, and particularly preferred is hydroxyethyl acrylate-terminated caprolactone oligomer, such as e.g. the commercially available Tone M100 (Tone is a trade mark).

The unmodified block copolymers useful for the purpose of the present invention are selectively hydrogenated block copolymers of vinyl aromatic compounds and conjugated dienes. Such block copolymers generally have network-forming structure of vinyl aromatic blocks and hydrogenated conjugated diene blocks wherein the vinyl aromatic blocks are phase separated into physically crosslinked hard domains which are connected by the conjugated diene blocks. Such a network-forming structure results when a block copolymer molecule has at least two vinyl aromatic blocks separated by a conjugated diene block of sufficient size to cause phase separation wherein the conjugated diene blocks form a continuous phase and the vinyl aromatic blocks form hard domains dispersed in the continuous phase. The block copolymer structure in principle may be radial, linear, or branched.

Preferred unmodified precursor block copolymers are those described in e.g. U.S. Patent No. Re 27,145 having a linear structure

A-B-A

wherein each A is a vinyl aromatic block and B is a hydrogenated conjugated diene block. The preferred vinyl aromatic block is polystyrene and the preferred conjugated diene blocks are hydrogenated polybutadiene or hydrogenated polyisoprene, of which hydrogenated polybutadiene is most preferred. The proportion of the blocks A to the block B and the relative molecular weights of each of these blocks is balanced to obtain a rubber having an optimum combination of properties such that it behaves as a vulcanized rubber without requiring the actual step of vulcanization. Examples of commercially available block copolymers are the KRATON G polymers (KRATON is a trade mark).

The unmodified precursor block copolymer may be modified with a polyester according to known processes, for instance according to the process disclosed in U.S. Patent No. 4,874,818. In general terms, the process of making the modified block copolymer involves first forming an intimate mixture of its components. This entails properly admixing and blending using appropriate devices, predetermined amounts of the selectively hydrogenated block copolymer with a polyester. A free radical initiator is also

2

added, conveniently in a melt of the said block copolymer. The amount of block copolymer used is generally in the range of from 96 to 99 wt%, while the amount of polyester is generally in the range of from 1 to 4 wt%, with about 2 wt% being preferred. The amount of the free radical initiator used is that which is sufficient to induce a grafting reaction. Quantitatively speaking, this amount is generally up to 5.0 wt%, and suitably about 1.5 wt%, based on the unmodified block copolymer.

Any compound that is capable of generating free radicals can be used in the practice of this invention as the free radical initiator. Typically, however, peroxides are preferred. Such peroxides include 2,5 dimethyl 2,5-bis(t-butylperoxy)hexane (LUPEROX 101), 2,5-dimethyl-2,5-bis(t-butyl peroxyl)hexyne-3 (LUPEROX 130), and di-t-butyl peroxide. LUPEROX is a trade mark.

It will be understood that the contacting of the base polymer with the initiator and the polyester should be performed in an apparatus capable of imparting a high level of mixing so as to rapidly contact the reactants. Devices such as an extruder, a Banbury mixer, a sigma blade mixer, and the like are examples of devices capable of imparting high levels of mixing. Extruders, and in particular a twin screw extruder or a single screw extruder, are most preferred to ensure rapid mixing. The contacting of the base polymer with the polyester and the initiator should be performed at sufficiently high temperature for sufficient time to allow reaction of the initiator and grafting of the monomer. In carrying out the modification process, temperatures above 200°C and reaction times above one minute are preferred.

The modified block copolymer can be extruded, pelletized, and then further mixed with at least one suitable aromatic polycarbonate to form the blend according to the present invention. The amount of modified, selectively hydrogenated block copolymer present in the blend is generally in the range of from 5 wt% to 15 wt%, preferably 8 to 12 wt%, with about 10 wt% being preferred. The amount of aromatic polycarbonate present in the inventive blend accordingly ranges from 85 to 95 wt%, preferably 88 to 92 wt%, with about 90 wt% being preferred.

The blend according to the present invention may contain other useful components or additives. These other components include, for example, fillers, pigments, antioxidants, stabilizers, processing oils, extenders and mould release agents.

The inventive blend has excellent mechanical properties, particularly low Temperature Notched Izod Impact Strength and improved stiffness (flexural modulus), as compared with similar blends utilizing unmodified block copolymer as shown by the examples and table.

The following non-limiting examples and Table I further illustrate the invention.

EXAMPLES

Example 1

The base polymer for this example, was a selectively hydrogenated styrene-butadiene-styrene triblock copolymer of which the polystyrene end-blocks had a number average molecular weight of 7400 and the polybutadiene midblock had a number average molecular weight of 35,000. A solution of 0.3 wt% Luperox 101 in acetone (1.5 wt% base polymer basis) was added to the base polymer followed by 5.0 wt% Tone M100 as polyester modifying agent. The mixture was extruded utilizing a corotating twin screw extruder achieving a melt temperature of about 240°C and a residence time of about 1 minute. The proton NMR spectrum of the product, following precipitation of the polymer from tetrahydrofuran into isopropyl alcohol indicated the modified block copolymer to have a Tone M100 content of 1.7 wt%.

Example 2

Example 1 was repeated. A Tone M100 grafting level of 2.0 wt% was determined from proton NMR analysis of the product.

Example 3

Example 1 was repeated except that the amount of Tone M100 polyester added was increased to 10 wt% on a base polymer basis. Proton NMR analysis of the product revealed a 3.8 wt% Tone M100 content in the modified polymer.

## Example 4

The base polymer for this example was a selectively hydrogenated styrene-isoprene diblock copolymer having a polystyrene block of 35,500 number average molecular weight and a polyisoprene block of 61,500 number average molecular weight. A solution of 0.2 wt% Luperox 101 diluted in acetone (1.5 wt% base polymer basis) was added to the base polymer followed by 5.0 wt% Tone M100 polyester. The mixture was extruded utilizing a corotating twin screw extruder achieving a melt temperature of about 270°C and a residence time of about 1 minute. The proton NMR spectrum of the product following precipitation of the polymer from tetrahydrofuran into isopropyl alcohol indicated a Tone M100 content in the block copolymer of 2.0 wt%.

## Example 5

Example 4 was repeated except the amount of Tone M100 polyester added was increased to 10 wt% on a base polymer basis. Proton NMR analysis revealed a 3.9 wt% Tone M100 content in the modified polymer.

## Example 6

Blends of bisphenol A polycarbonate and the functionalized block copolymers were prepared. Polycarbonate utilized for blend preparation was LEXAN 141 obtained from G.E. Plastics (LEXAN is a trade mark). Polycarbonate and blends thereof were dried at 160°C for at least 8 hours prior to all processing steps. Blends were prepared on a corotating twin screw extruder. Specimens were injection moulded for Flexural Modulus and Notched Izod Impact Strength testing. Notched Izod testing (0.32 cm (1/8 inch)) was conducted at -40°C according to ASTM D256. Flexural Modulus testing was conducted according to ASTM D790. Test results are shown in Table I. These data illustrate the improvements in Flexural Modulus and low temperature Notched Izod in blends of polycarbonate and the modified polymers according to the present invention.

## Control Examples 1 and 2

Example 6 was repeated except that instead of the modified block copolymer of Example 1, the corresponding unmodified precursor block copolymer was used.

The results are listed in Table I.

4

TABLE 1

| Example | Blend Composition | | | Properties | |
|---|---|---|---|---|---|
| | LEXAN 141 (wt%) | Block Copolymer (wt%) | Tone M100 Content in block copolymer (wt%) | Notched Izod in J/cm (ft. lb/in) | Flexural Modulus in bar (kpsi) |
| LEXAN 141 | 100 | 0 | 0 | 1.3 (2.4) | 23.5 (341) |
| Control 1 | 95 | 5 | 0 | 2.1 (3.9) | 23.0 (333) |
| 6A | 95 | 5 | 1.7 | 2.4 (4.5) | 22.7 (329) |
| 6B | 95 | 5 | 2.0 | 2.9 (5.4) | 22.8 (330) |
| 6C | 95 | 5 | 3.8 | 2.6 (4.8) | 22.5 (326) |
| Control 2 | 90 | 10 | 0 | 3.7 (6.9) | 19.8 (287) |
| 6D | 90 | 10 | 1.7 | 5.3 (9.9) | 20.5 (297) |
| 6E | 90 | 10 | 2.0 | 5.5 (10.3) | 21.0 (304) |
| 6F | 90 | 10 | 3.8 | 3.2 (6.0) | 21.1 (306) |

Control Blends 1 and 2 were prepared with unmodified block copolymer.

Blends 6A and 6D were prepared with modified block copolymer from Example 1.

Blends 6B and 6E were prepared with modified block copolymer from Example 2.

Blends 6C and 6F were prepared with modified block copolymer from Example 3.

LEXAN 141 is bisphenol-A polycarbonate from G.E. Plastics.

The data of Table 1 demonstrate the improvements in low temperature impact strength of the inventive blends relative to the non-inventive blends, while the stiffness of the inventive blends is also excellent.

## Claims

1. A blend comprising at least one aromatic polycarbonate and a selectively hydrogenated block copolymer comprising at least one block of polymerized vinyl aromatic compound and at least one hydrogenated block of polymerized conjugated diene, which block copolymer has been modified with at least one polyester which is miscible with the aromatic polycarbonate.

2. A blend according to claim 1, wherein the aromatic polycarbonate is bisphenol A polycarbonate.

5

3. A blend according to claim 1 or 2, wherein the aromatic polycarbonate is present in an amount of from 85 to 95% by weight based on the total weight of the blend.

4. A blend according to any one of claims 1 to 3, wherein the selectively hydrogenated block copolymer is a polystyrene - hydrogenated polybutadiene - polystyrene block copolymer.

5. A blend according to any one of claims 1 to 4, wherein the polyester is a hydroxyethyl acrylate-terminated caprolactone oligomer.

6. A blend according to any one of claims 1 to 5, wherein the polyester is present in the modified block copolymer in an amount of from 1 to 4% by weight based on total weight of modified block copolymer.